(19) Europäisches Patentamt / European Patent Office / Office européen des brevets

(11) **EP 4 383 022 A1**

(12) **EUROPEAN PATENT APPLICATION**

(43) Date of publication:
**12.06.2024 Bulletin 2024/24**

(21) Application number: **23213907.1**

(22) Date of filing: **04.12.2023**

(51) International Patent Classification (IPC):
**G05B 15/02** (2006.01)

(52) Cooperative Patent Classification (CPC):
**G05B 15/02; G05B 2219/25011; G05B 2219/2642**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 IN 202211070895**

(71) Applicant: **Honeywell International Inc.**
**Charlotte, NC 28202 (US)**

(72) Inventors:
• **GHUNGRUDKAR, Siddhant Sharad**
  **Charlotte 28202 (US)**

• **GUPTA, Bhavesh**
  **Charlotte 28202 (US)**
• **RANJAN, Prabhat**
  **Charlotte 28202 (US)**
• **GHOSH, Surjayan**
  **Charlotte 28202 (US)**
• **SANDEEP, Deepika**
  **Charlotte 28202 (US)**
• **Pal, Rohil**
  **Charlotte 28202 (US)**

(74) Representative: **Houghton, Mark Phillip et al**
**Patent Outsourcing Limited**
**1 King Street**
**Bakewell, Derbyshire DE45 1DZ (GB)**

(54) **OCCUPANCY ESTIMATION BASED ON MULTIPLE SENSOR INPUTS**

(57) An occupancy count of the space of a building from each of a plurality of occupancy sensors may be monitored and an error parameter for each of the plurality of occupancy sensors may be identified, each error parameter representative of a difference between the occupancy count of the respective occupancy sensor and a ground truth occupancy count of the space, normalized over a period of time. An assigned weight for each of the plurality of occupancy sensors may be determined based at least in part on the respective error parameter. The estimated occupancy count of the space of the building is determined based at least in part on the occupancy count of each of the plurality of occupancy sensors and the assigned weight of each of the plurality of occupancy sensors. The BMS system is controlled based at least in part on the estimated occupancy count.

FIG. 3

EP 4 383 022 A1

**Description**

TECHNICAL FIELD

The present disclosure pertains to building control systems and more particularly to building control systems that control building systems in accordance with estimated occupancy values.

BACKGROUND

Building control systems such as but not limited to Heating, Ventilating and Air Conditioning (HVAC) systems, security systems, lighting systems, fire systems, water systems, energy distribution systems and/or other building control systems may be configured to operate at least in part in accordance with occupancy values. For example, for an HVAC system, when building occupancy increases, there may be a desire to increase ventilation, for example, to maintain healthy building parameters, or to change temperature setpoints in order to maintain comfort for the occupants within the building. When building occupancy decreases, there may be a desire to decrease ventilation or to change temperature setpoints in order to save energy. Inclusion of occupancy sensors in order to determine occupancy can increase the costs and complexity of a building control system. Some buildings include multiple sensors that can provide estimates of occupancy with varying degrees of accuracy, and some buildings may include differing occupancy sensors. What would be desirable would be a simplified model that can be trained to accept estimates of occupancy from each of any of a variety of different types of occupancy sensors, and identify weights for each of the estimates of occupancy to provide as accurate an occupancy estimate as feasible for a space.

SUMMARY

This disclosure relates to building control systems and more particularly to building control systems that control building systems in accordance with estimated occupancy values. An example may be found in a method for controlling one or more components of a Building Management System (BMS) of a building in accordance with an estimated occupancy count of a space of the building. The illustrative method includes monitoring an occupancy count of the space of the building using each of a plurality of occupancy sensors, and identifying an error parameter for each of the plurality of occupancy sensors. Each error parameter may be representative of a difference between the occupancy count of the respective occupancy sensor and a ground truth occupancy count of the space, normalized over a period of time. The illustrative method includes determining an assigned weight for each of the plurality of occupancy sensors based at least in part on the respective error parameter. The estimated occupancy count of the space of the building is determined based at least in part on the occupancy count of each of the plurality of occupancy sensors and the assigned weight of each of the plurality of occupancy sensors. The illustrative method includes controlling the BMS system based at least in part on the estimated occupancy count.

Another example may be found in a system for controlling one or more components of a Building Management System (BMS) of a building in accordance with an estimated occupancy count of a space of the building. The illustrative system includes a plurality of occupancy sensors each for monitoring an occupancy count of the space of the building and a controller that is operatively coupled to the plurality of occupancy sensors. The controller is configured to identify an error parameter for each of the plurality of occupancy sensors, wherein each error parameter is representative of a difference between the occupancy count of the respective occupancy sensor and a ground truth occupancy count of the space, normalized over a period of time. The controller is configured to determine an assigned weight for each of the plurality of occupancy sensors based at least in part on the respective error parameter, and to determine the estimated occupancy count of the space of the building based at least in part on the occupancy count of each of the plurality of occupancy sensors and the assigned weight of each of the plurality of occupancy sensors. The controller is configured to control the BMS system based at least in part on the estimated occupancy count.

Another example may be found in a non-transitory computer-readable storage medium having stored thereon instructions that when executed by one or more processors cause the one or more processors to access a trained model that is trained to predict an occupancy count of a space of a building using time stamped occupancy data from a number of different occupancy sensors and corresponding time stamped ground truth occupancy data. The one or more processors are caused to predict an occupancy count of the space of the building by providing the trained model with time stamped occupancy data pertaining to the space of the building from each of the number of different occupancy sensors, and the trained model outputting an estimated occupancy value that represents an estimated occupancy count in space of the building. The one or more processors are caused to control a BMS of the building based at least in part on the estimated occupancy value.

The preceding summary is provided to facilitate an understanding of some of the features of the present disclosure and is not intended to be a full description. A full appreciation of the disclosure can be gained by taking the entire specification, claims, drawings, and abstract as a whole.

BRIEF DESCRIPTION OF THE DRAWINGS

The disclosure may be more completely understood in consideration of the following description of various illustrative embodiments of the disclosure in connection with the accompanying drawings, in which:

Figure 1 is a schematic block diagram of an illustrative system for controlling a Building Management System (BMS);
Figure 2 is a flow diagram showing an illustrative method for controlling a BMS; and
Figure 3 is a schematic block diagram providing an example of estimating occupancy based on multiple occupancy sensor inputs.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

DESCRIPTION

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.
All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).
As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.
It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

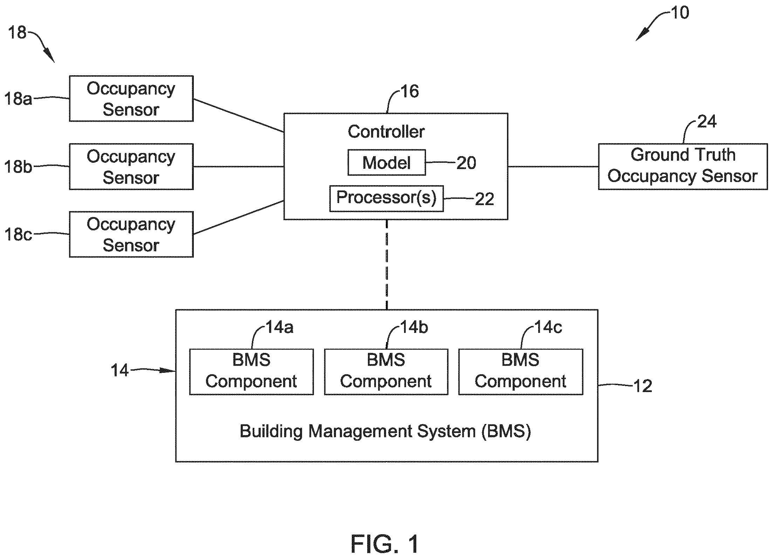

Figure 1 is a schematic block diagram showing an illustrative system 10 for controlling operation of a Building Management System (BMS) 12. The BMS 12 includes a number of BMS components 14, individually labeled as 14a, 14b and 14c. This is merely illustrative, as the BMS 12 may include any number of BMS components 14, and in some cases may include considerably more than three BMS components 14. The BMS 12 may represent a Heating, Ventilating and Air Conditioning (HVAC) system, a security system, a lighting system, a fire system, a water system, an energy distribution system and/or any other building control system. When the BMS 12 includes an HVAC system, the BMS components 14 may include heating sources, cooling sources, ventilation sources, individual Air Handling Units (AHU), Variable Air Volume (VAV) boxes, and the like. While not expressly shown, the BMS 12 may include one or more controllers that control operation of some of the BMS components 14.
In some cases, the controllers within the BMS 12 may receive communications from a controller 16 that is part of the system 10. The controller 16 may be operably coupled with a number of occupancy sensors 18, individually labeled as 18a, 18b and 18c. In some cases, the system 10 may include more than three occupancy sensors 18. The system 10 may include just one or two occupancy sensors 18. At least some of the occupancy sensors 18 may be of a different type of occupancy sensor.
For example, the occupancy sensors 18 may include an access card reader that requires each person entering a space to proffer their access card to the access card reader. In some cases, the occupancy sensors 18 may include motion sensors such as but not limited to PIR (passive infrared) sensors. In some cases, one or more motion sensors may be part of a lighting system of the building that detects motion in the building and in response automatically activates lights. In some cases, the occupancy sensors 18 may include one or more wireless access points (e.g. Wifi, Bluetooth, etc.) that automatically connect to one or more mobile devices (mobile phone, RFID card, etc.) carried by occupants of the building. The wireless access points may identify how many occupant devices are connected to the wireless access point, and thus the number of occupants that are present in the corresponding building space. In some cases, the occupancy sensors 18 may represent the results of video analytics performed on a captured video stream that detect people in a space. In some cases, the occupancy sensors 18 may include carbon dioxide ($CO_2$) sensors, as $CO_2$ concentrations may be useful as an indication of occupancy of a space, although in some cases the $CO_2$ concentrations can lag changes in occupancy. These are just examples occupancy sensor types.

In some cases, the controller 16 may be considered as including a model 20. The model 20 may be a trained model, for example, and may be configured to receive inputs from the various occupancy sensors 18 and to determine an estimated current occupancy of a space based at least on the inputs from the various occupancy sensors 18. The controller 16 may be considered as including one or more processors 22. The one or more processors 22 may handle at least some of the data processing performed by the controller 16. The one or more processors 22 may execute executable instructions that are performed by the controller 16.

The controller 16 may be operably coupled with a ground truth occupancy sensor 24. In some cases, the ground truth occupancy sensor 24 may be one of the occupancy sensors 18 that consistently provides the most accurate indication of actual occupancy. A signal from the ground truth occupancy sensor 24 may be used to determine the relative accuracy of the signals from the other occupancy sensors 18. In some cases, the ground truth occupancy sensor 24 may be a video camera running an appropriate person detection algorithm. The ground truth occupancy sensor 24 may be a video camera that is part of the system 10. In some cases, the ground truth occupancy sensor 24 may be a video camera that is temporarily installed within the system 10 for training the model 20, and is subsequently removed. In some cases, an actual observer (person) may be used to determine actual occupancy of a space while training the model 20, with the actual observer providing and/or confirming the ground truth occupancy count of the space over a training period of time.

In some cases, the controller 16 may be configured to identify an error parameter for each of the occupancy sensors 18. Each error parameter may be representative of a difference between the occupancy count of the respective occupancy sensor 18 and the ground truth occupancy count of the space, normalized over a period of time. The controller 16 may be configured to determine an assigned weight for each of the plurality of occupancy sensors based at least in part on the respective error parameter. The controller 16 may be configured to determine the estimated occupancy count for the space of the building based at least in part on the occupancy count of each of the occupancy sensors 18 and the assigned weight of each of the occupancy sensors 18. The controller 16 may be configured to control the BMS 12 based at least in part on the estimated occupancy count.

In some cases, the error parameter for each of the occupancy sensors 18 represents a normalized root mean square error (NRMSE) for the respective occupancy sensor. In some instances, the NRMSE for each of the respective occupancy sensors may be calculated in accordance with Equation (1):

$$nrmse_i = min\left(1, \frac{1}{\overline{Y_i}}\sqrt{\frac{1}{N}\sum(Y_i - Y_{ground\ truth})^2}\right) \quad \text{Equation (1),}$$

where:

nrmse$_i$ is the normalized root mean square error for the i$^{th}$ occupancy sensor;
$\overline{Y_i}$ is the mean occupancy count reported by the i$^{th}$ occupancy sensor;
N is the total number of data points of occupancy count;
$Y_i$ is the occupancy count reported by the i$^{th}$ occupancy sensor; and
$Y_{ground\ truth}$ is the ground truth occupancy count.

In some cases, the assigned weight (w) for each of the plurality of occupancy sensors is determined by subtracting the NRMSE for the respective occupancy sensor from one, such as in accordance with Equation (2) below:

$$w_i = (1 - nrmse_i) \quad \text{Equation (2).}$$

The estimated occupancy count of the space of the building may be a weighted average of the occupancy count from all of the plurality of occupancy sensors. In some cases, the estimated occupancy count may be calculated in accordance with Equation (3):

$$Effective\ Occupancy\ Count = \frac{\sum w_i * y_i}{\sum w_i} \quad \text{Equation (3),}$$

where $w_i$ is the weight assigned to the $i^{th}$ occupancy sensors, and is calculated in accordance with Equation (2) above.

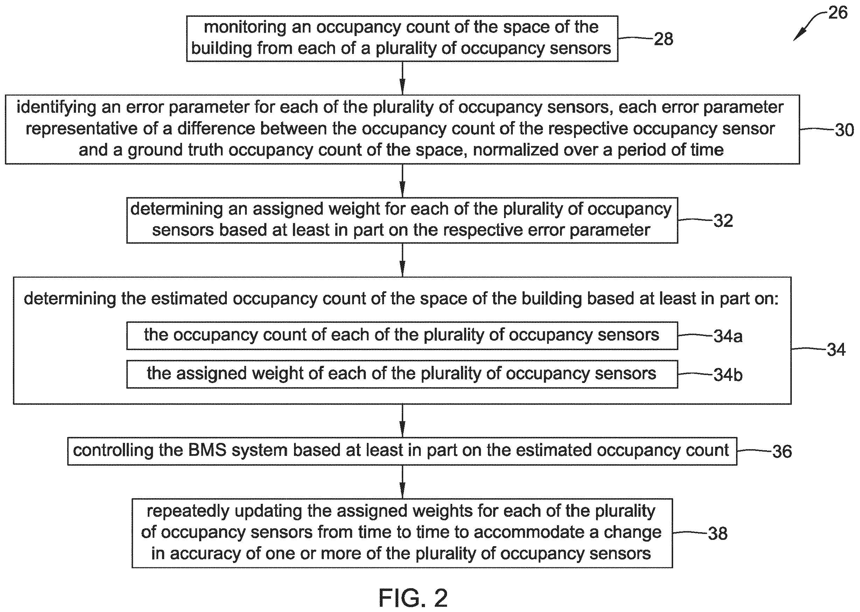

Figure 2 is a flow diagram showing an illustrative method 26 for controlling one or more components of a Building Management System (BMS) of a building (such as the BMS components 14 of the BMS 12) in accordance with an estimated occupancy count of a space of the building. The illustrative method 26 includes monitoring an occupancy count of the space of the building from each of a plurality of occupancy sensors, as indicated at block 28. The method 26 includes identifying an error parameter for each of the plurality of occupancy sensors, each error parameter representative of a difference between the occupancy count of the respective occupancy sensor and a ground truth occupancy count of the space, normalized over a period of time, as indicated at block 30. In some cases, the period of time may be a training period of time.

An assigned weight is determined for each of the plurality of occupancy sensors based at least in part on the respective error parameter, as indicated at block 32. The estimated occupancy count of the space of the building is determined, as indicated at block 34. The estimated occupancy count is based at least in part on the occupancy count of each of the plurality of occupancy sensors, as indicated at block 34a. The estimated occupancy count is based at least in part on the assigned weight of each of the plurality of occupancy sensors, as indicated at block 34b. The illustrative method 26 includes controlling the BMS based at least in part on the estimated occupancy count, as indicated at block 36.

In some cases, the error parameter for each of the plurality of occupancy sensors may represent a normalized root mean square error (NRMSE) for the respective occupancy sensor over a period of time. In some cases, the NRMSE for each of the respective occupancy sensors may be calculated in accordance with Equation (1):

$$nrmse_i = min\left(1, \frac{1}{\overline{Y_i}} \sqrt{\frac{1}{N}\sum(Y_i - Y_{ground\ truth})^2}\right) \quad \text{Equation (1)},$$

where:

nrmse$_i$ is the normalized root mean square error for the $i^{th}$ occupancy sensor;
$\overline{Y_l}$ is the mean occupancy count reported by the $i^{th}$ occupancy sensor;
N is the total number of data points of occupancy count;
$Y_i$ is the occupancy count reported by the $i^{th}$ occupancy sensor; and
$Y_{ground\ truth}$ is the ground truth occupancy count.

In some cases, the assigned weight (w) for each of the plurality of occupancy sensors may be determined by subtracting the NRMSE for the respective occupancy sensor from one, such as in accordance with Equation (2) below:

$$w_i = (1 - nrmse_i) \quad \text{Equation (2)}.$$

The estimated occupancy count of the space of the building may be a weighted average of the occupancy count from all of the plurality of occupancy sensors. In some cases, the estimated occupancy count may be calculated in accordance with Equation (3):

$$Effective\ Occupancy\ Count = \frac{\sum w_i * y_i}{\sum w_i} \quad \text{Equation (3)},$$

where $w_i$ is the weight assigned to the $i^{th}$ occupancy sensors, and is calculated in accordance with Equation (2) above. In some cases, the method 26 may further include repeatedly updating the assigned weights for each of the plurality of occupancy sensors from time to time to accommodate a change in accuracy (e.g. sensor drift) of one or more of the plurality of occupancy sensors, as indicated at block 36.

In some instances, the ground truth occupancy count of the space may be manually recorded over time by an operator. In some instances, the ground truth occupancy count of the space may be determined by performing video analytics on one or more video streams from one or more video cameras.

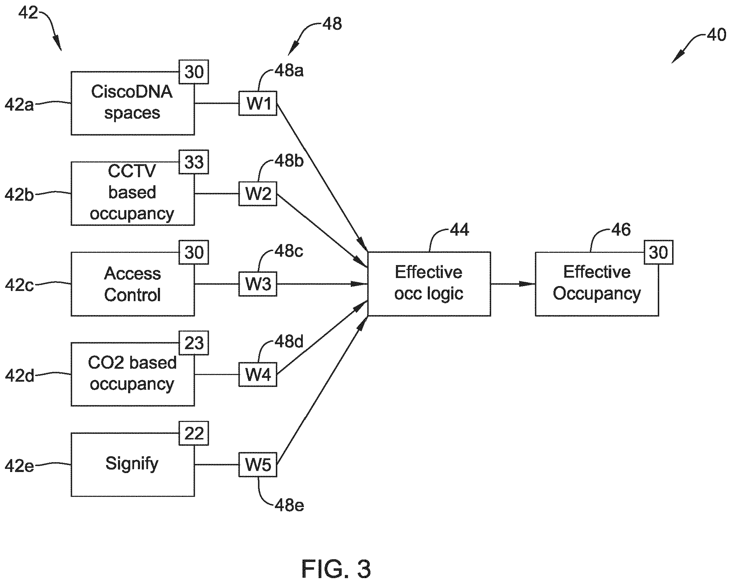

Figure 3 is a schematic block diagram providing an example 40 of estimating occupancy based on multiple occupancy sensor inputs. The example 40 includes occupancy estimates from a number of occupancy sensors 42. In particular, the example 40 includes an occupancy sensor 42a that provides "CiscoDNA spaces" occupancy data. The occupancy sensor 42a provides occupancy data that is based at least in part on how many devices (such as individual smart phones) are using the WiFi in a given space. In some cases, the occupancy sensor 42a may provide the results of triangulating between signals in order to better ascertain the location of the respective WiFi-using devices in a building (and hence their owners).

An occupancy sensor 42b provides camera-based occupancy data. In some cases, the occupancy sensor 42b may represent the results of video analytics performed on a captured video stream that detects people in the space. An occupancy sensor 42c provides occupancy data that is based upon card readers and/or other components of an access control system. An occupancy sensor 42d provides occupancy data that is based upon the output of one or more $CO_2$ sensors located within the building. An occupancy sensor 42e provides data from a "Signify" system, which is a lighting control system that includes cameras/motion sensors associated with certain lighting fixtures in the space that can be used to determine an occupancy count in the space.

Each of the occupancy sensors 42 provide their occupancy data to a logic block 44 that compiles the signals from each of the occupancy sensors 42 and outputs an effective occupancy estimate of the space, as indicated at block 46. In some cases, the logic block 44 may carry out the method 26 of Figure 2, for example.

As shown in Figure 3, each of the occupancy sensors 42 are assigned a relative weight 48. As shown, the occupancy sensor 42a is assigned a weight "w1" 48a, the occupancy sensor 42b is assigned a weight "w2" 48b, the occupancy sensor 42c is assigned a weight "w3" 48c, the occupancy sensor 42d is assigned a weight "w4" 48d and the occupancy sensor 42e is assigned a weight "w5" 48e. In this example, the weights "w1", "w2", "w3", "w4" and "w5" are normalized to add up to one. The relative weights are assigned based on how accurate a particular occupancy sensor 42 is relative to a ground truth occupancy count. Occupancy sensors 42 that are relatively more accurate will be assigned a relatively higher weight while occupancy sensors 42 that are relatively less accurate will be assigned a relatively lower weight.

In the example 40 of Figure 3, it can be seen that each of the occupancy sensors 42 is reporting a current occupancy. For a particular space, the occupancy sensor 42a is reporting a total of 30 people, the occupancy sensor 42b is reporting a total of 33 people, the occupancy sensor 42c is reporting a total of 30 people, the occupancy sensor 42d is reporting a total of 23 people and the occupancy sensor 42e is reporting a total of 22 people. The logic block 44 determines a weighted average of those values, and is reporting an effective occupancy 46 of 30 people. While the actual weighting values are not shown, it will be appreciated that the occupancy sensors 42a, 42b and 42c have a relatively higher weighting while the occupancy sensors 42d and 42e have a relatively lower weighting which may be zero or non-zero.

In some cases, each of the occupancy sensors 42a-42e may have a known error range in their sensed occupancy of a space. The known error range may be determined by, for example, characterizing each sensor type in advance under a variety of environments and/or conditions. The known error range may be expressed as a standard deviation of occupancy count or in any other suitable manner. With this, a simulator may be used to produce, for a set of ground truth occupancy counts, simulated occupancy count data from each of a set of a proposed set of sensors of a space. The proposed set of sensors may be sensors that are proposed for a particular installation or may be sensors that are already in an existing space. From this, a NRMSE may be determined for each sensor in the proposed set of sensors, along with sensor weights for each of the sensors. This approach may facilitate determining appropriate weights for a particular combination of sensors for a new installation and/or for a retrofit installation, without having to train a model on site.

**Claims**

1. A method for controlling one or more components of a Building Management System (BMS) of a building in accordance with an estimated occupancy count of a space of the building, the method comprising:

   monitoring an occupancy count of the space of the building from each of a plurality of occupancy sensors;
   identifying an error parameter for each of the plurality of occupancy sensors, each error parameter representative of a difference between the occupancy count of the respective occupancy sensor and a ground truth occupancy count of the space, normalized over a period of time;
   determining an assigned weight for each of the plurality of occupancy sensors based at least in part on the respective error parameter;
   determining the estimated occupancy count of the space of the building based at least in part on:

   the occupancy count of each of the plurality of occupancy sensors;
   the assigned weight of each of the plurality of occupancy sensors; and controlling the BMS based at least in part on the estimated occupancy count.

2. The method of claim 1, wherein the error parameter for each of the plurality of occupancy sensors represents a normalized root mean square error (NRMSE) for the respective occupancy sensor.

3. The method of claim 2, wherein the NRMSE for each of the respective occupancy sensors is calculated in accordance with Equation (1):

$$nrmse_i = min\left(1, \frac{1}{\overline{Y}_i}\sqrt{\frac{1}{N}\sum\left(Y_i - Y_{ground\ truth}\right)^2}\right) \quad \text{Equation (1),}$$

where:

nrmse$_i$ is the normalized root mean square error for the i$^{th}$ occupancy sensor;
$\overline{Y}_l$ is the mean occupancy count reported by the i$^{th}$ occupancy sensor;
N is the total number of data points of occupancy count;
$Y_i$ is the occupancy count reported by the i$^{th}$ occupancy sensor; and
$Y_{ground\ truth}$ is the ground truth occupancy count.

4. The method of any of claims 2 or 3, wherein the assigned weight (w) for each of the plurality of occupancy sensors is determined by subtracting the NRMSE for the respective occupancy sensor from one.

5. The method of claim 1, wherein the estimated occupancy count of the space of the building is a weighted average of the occupancy count from all of the plurality of occupancy sensors.

6. The method of any of claims 1-5, wherein the estimated occupancy count is calculated in accordance with Equation (2):

$$Effective\ Occupancy\ Count\ = \frac{\sum w_i * y_i}{\sum w_i} \quad \text{Equation (3),}$$

where $w_i$ is the weight assigned to the i$^{th}$ occupancy sensors, and is calculated in accordance with Equation (3):

$$w_i = (1 - nrmse_i) \quad \text{Equation (2).}$$

7. The method of any of claims 1-6, wherein the period of time corresponds to a training period of time.

8. The method of any of claim 1-7, further comprising repeatedly updating the assigned weights for each of the plurality of occupancy sensors from time to time to accommodate a change in accuracy of one or more of the plurality of occupancy sensors.

9. The method of any of claims 1-8, wherein the ground truth occupancy count of the space is manually recorded by an operator.

10. The method of any of claims 1-9, wherein the ground truth occupancy count of the space is determined by performing video analytics on one or more video streams from one or more video cameras.

11. A system for controlling one or more components of a Building Management System (BMS) of a building in accordance with an estimated occupancy count of a space of the building, the system comprising:

a plurality of occupancy sensors each for monitoring an occupancy count of the space of the building;
a controller operatively coupled to the plurality of occupancy sensors, the controller configured to:

identify an error parameter for each of the plurality of occupancy sensors, each error parameter representative of a difference between the occupancy count of the respective occupancy sensor and a ground truth occupancy count of the space, normalized over a period of time;
determine an assigned weight for each of the plurality of occupancy sensors based at least in part on the respective error parameter;
determine the estimated occupancy count of the space of the building based at least in part on:

the occupancy count of each of the plurality of occupancy sensors;
the assigned weight of each of the plurality of occupancy sensors; and

control the BMS based at least in part on the estimated occupancy count.

12. The system of claim 11, wherein the error parameter for each of the plurality of occupancy sensors represents a normalized root mean square error (NRMSE) for the respective occupancy sensor.

13. The system of any of claims 11-12, wherein the assigned weight (w) for each of the plurality of occupancy sensors is determined by subtracting the NRMSE for the respective occupancy sensor from one.

14. The system of any of claims 11-13, wherein the estimated occupancy count of the space of the building is a weighted average of the occupancy count from all of the plurality of occupancy sensors.

15. The system of any of claims 11-14, wherein the estimated occupancy count is calculated in accordance with Equation (2):

$$Effective\ Occupancy\ Count\ =\ \frac{\sum w_i * y_i}{\sum w_i} \quad \text{Equation (3),}$$

where $w_i$ is the weight assigned to the ith occupancy sensors, and is calculated in accordance with Equation (3):

$$w_i = (1 - nrmse_i) \quad \text{Equation (2).}$$

FIG. 1

monitoring an occupancy count of the space of the building from each of a plurality of occupancy sensors —28

identifying an error parameter for each of the plurality of occupancy sensors, each error parameter representative of a difference between the occupancy count of the respective occupancy sensor and a ground truth occupancy count of the space, normalized over a period of time —30

determining an assigned weight for each of the plurality of occupancy sensors based at least in part on the respective error parameter —32

determining the estimated occupancy count of the space of the building based at least in part on:

the occupancy count of each of the plurality of occupancy sensors —34a

the assigned weight of each of the plurality of occupancy sensors —34b

—34

controlling the BMS system based at least in part on the estimated occupancy count —36

repeatedly updating the assigned weights for each of the plurality of occupancy sensors from time to time to accommodate a change in accuracy of one or more of the plurality of occupancy sensors —38

—26

FIG. 2

EP 4 383 022 A1

FIG. 3

Europäisches
Patentamt

European
Patent Office

Office européen
des brevets

# EUROPEAN SEARCH REPORT

Application Number

EP 23 21 3907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/041523 A1 (MURTHY ABHISHEK [US] ET AL) 11 February 2021 (2021-02-11) | 1,7-11 | INV.<br>G05B15/02 |
| Y | * paragraph [0005] – paragraph [0014] *<br>* paragraph [0026] – paragraph [0056] * | 2,5,12,14 | |
| A | | 3,4,6,13,15 | |
| Y | RAJABI HAMID HRAJABI2@UCMERCED EDU ET AL: "MODES <u>mu</u>lti-sensor <u>o</u>ccupancy <u>d</u>ata-driven <u>e</u>stimation <u>s</u>ystem for smart buildings", PROCEEDINGS OF THE GENETIC AND EVOLUTIONARY COMPUTATION CONFERENCE COMPANION, ACMPUB27, NEW YORK, NY, USA, 28 June 2022 (2022-06-28), pages 228-239, XP058820009, DOI: 10.1145/3538637.3538852 ISBN: 978-1-4503-9352-2 | 2,5,12,14 | |
| A | * the whole document * | 3,4,6,13,15 | **TECHNICAL FIELDS SEARCHED (IPC)** |
| A | US 2019/360714 A1 (KONRAD JANUSZ L [US] ET AL) 28 November 2019 (2019-11-28)<br>* paragraph [0002] – paragraph [0004] *<br>* paragraph [0011] – paragraph [0083] * | 1-15 | G05B |

The present search report has been drawn up for all claims

| Place of search | Date of completion of the search | Examiner |
|---|---|---|
| The Hague | 16 April 2024 | Patsiopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 3907

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2024

| Patent document cited in search report | Publication date | Patent family member(s) | Publication date |
|---|---|---|---|
| US 2021041523 A1 | 11-02-2021 | CN 111788496 A | 16-10-2020 |
| | | EP 3759516 A1 | 06-01-2021 |
| | | JP 6921332 B2 | 18-08-2021 |
| | | JP 2021513171 A | 20-05-2021 |
| | | US 2021041523 A1 | 11-02-2021 |
| | | WO 2019166354 A1 | 06-09-2019 |
| US 2019360714 A1 | 28-11-2019 | US 2019360714 A1 | 28-11-2019 |
| | | WO 2019226898 A1 | 28-11-2019 |

For more details about this annex : see Official Journal of the European Patent Office, No. 12/82